# EUROPÄISCHE PATENTANMELDUNG

(11) **EP 3 305 605 A1**
(43) Veröffentlichungstag der Anmeldung: **11.04.2018**
(21) Anmeldenummer: 17194365.7
(22) Anmeldetag: 02.10.2017
(51) Int. Cl.: B60R 22/20

(54) **GURTHÖHENVERSTELLEINHEIT**

(30) Priorität: 05.10.2016 DE 202016105528 U
(71) Anmelder: Wilhelm Schröder GmbH, 58849 Herscheid (DE)
(72) Erfinder: FISWICK, Björn, 58540 Meinerzhagen (DE)
(74) Vertreter: Hoefer & Partner Patentanwälte mbB

(57) **Zusammenfassung**

Die Erfindung betrifft eine Gurthöhenverstelleinheit (1) mit einer Laufschiene (1'), die eine Mehrzahl von durch Rastausnehmungen (1'A bis 1'D) bestimmte Rastpositionen, und eine Befestigungsausnehmung (1'E) an einem ersten Endbereich (1'G), und eine Hakenanordnung (1'F) an einem gegenüber angeordneten zweiten Endbereich (1'H), aufweist. Ferner ist ein Führungsbereich (1'J) zwischen dem ersten und dem zweiten Endbereich (1'G, 1'H), und ein Gleitschlitten (2) vorgesehen, der im Führungsbereich (1'J) der Laufschiene (1') verschieblich geführt ist und hierfür ein Schlittenblech (12) aufweist. Am Schlittenblech (12) ist ein Schlittengehäuse (2A) befestigt, das einen ersten Endbereich (2B) mit einem Mitnehmer (2C) und einen gegenüber angeordneten zweiten Endbereich (2D) aufweist, und der einen drehbar gelagerten Auslösehebel (3) aufweist, der mit einem Anlagehebel (15) eines drehbar gelagerten Riegels (5) in Wirkverbindung steht. Schließlich ist der Riegel (5) ein Hybridbauteil, das zwei Metallriegelteile (5A, 5B) und eine Kunststoffummantelung (13) mit einer Sollbruchstelle (13') aufweist, wobei die Kunststoffummantelung (13) einen Ummantelungsbereich (5D) der Metallriegelteile (5A, 5B) umgibt.

## Beschreibung

Die Erfindung betrifft eine Gurthöhenverstelleinheit gemäß dem Oberbegriff des Anspruches 1.

Eine derartige Gurthöhenverstelleinheit ist aus der DE 20 2006 007 220 U1 bekannt.

Bei einer Gurthöhenverstelleinheit bzw. einem Gurthöhenverstellsystem handelt es sich um eine Anordnung, die aus einer Mehrzahl von Metallstanzteilen sowie diversen Kunststoffteilen aufgebaut ist, die zu einem Gesamtbauteil konfektioniert werden. Derartige Gurthöhenverstelleinheiten werden in Kraftfahrzeugen am Kraftfahrzeugkörper, beispielsweise der sog. B-Säule der Fahrzeugkarosserie montiert und gelten als Sicherheitsbauteile. Diese Sicherheitsbauteile müssen enormen und unterschiedlichsten Anforderungen gemäß den Lastenheften der jeweiligen Fahrzeughersteller standhalten.

Es ist Aufgabe der vorliegenden Erfindung, eine Gurthöhenverstelleinheit der dem Oberbegriff des Anspruches 1 entsprechenden Art zu schaffen, die seitencrash-tauglich sowie komfort- und geräuschoptimiert ist und flacher im Vergleich zu bekannten Gurthöhenverstelleinheiten ausgebildet ist.

Die Lösung dieser Aufgabe erfolgt durch die Merkmale des Anspruches 1.

Neben den Aufgabenaspekten, die die erfindungsgemäße Gurthöhenverstelleinheit erfüllt, ergibt sich vorteilhafterweise, dass sie ebenfalls mit einer separaten Entriegelung ausgeführt werden kann. Bei der geometrischen Ausgestaltung der erfindungsgemäßen Gurthöhenverstelleinheit ist es möglich, individuellen Anforderungen an unterschiedliche Einbaubedingungen Rechnung zu tragen. Ferner ergibt sich der Vorteil, dass die erfindungsgemäße Gurthöhenverstelleinheit so ausgebildet werden kann, dass Vorgaben zum Brennverhalten gemäß der Richtlinie TL1010 erfüllbar sind.

Ferner ist es möglich, Schmierstoffe gemäß der Richtlinie TL4745 zu verwenden, wobei ein Kontakt zwischen dem Schmierstoff und Gurtband vermieden werden kann.

Der Verstellweg der erfindungsgemäßen Gurthöhenverstelleinheit ist anpassbar und kann z.B. vier Rastpositionen umfassen, die durch entsprechende Rastausnehmungen in einer Laufschiene definiert werden. Der Verfahrweg der erfindungsgemäßen Gurthöhenverstelleinheit ist hierbei anpassbar und kann beispielsweise 70,5 mm betragen, wobei ein rastloses Prinzip ebenfalls erreichbar ist.

Die erfindungsgemäße Gurthöhenverstelleinheit kann beispielsweise eine Höhe von 13,6 mm und eine Breite von 36 mm haben, wobei die Höhe von der Anschraubebene des Rohbaues zur Anschraubebene des Gurtumlenkers definiert ist.

Ferner kann die erfindungsgemäße Gurthöhenverstelleinheit die Funktion eines ganzen Metallumlenkers erfüllen.

Ferner ist es möglich, dass die erfindungsgemäße Gurthöhenverstelleinheit rohbauseitig maximal einen Anschraubpunkt aufweist.

Aufgrund der erfindungsgemäßen Ausgestaltung der Gurthöhenverstelleinheit ist es vorteilhafterweise möglich, dass sie ein Baugruppengewicht von etwa 200g erreicht.

Die Unteransprüche haben vorteilhafte Weiterbildungen der Erfindung zum Inhalt.

Um die Bedienbarkeit der erfindungsgemäßen Gurthöhenverstelleinheit zu erleichtern, ist es möglich, eine sog. Komfortfeder vorzusehen, die den Bediener bei einer gewünschten Höhenverstellung unterstütz. Bei einer weiteren bevorzugten Ausführungsform ist ferner eine Druckfeder vorgesehen, die dafür sorgt, dass ein Rastelement nach Betätigen eines Auslösehebels der erfindungsgemäßen Gurthöhenverstelleinheit wieder in die Verrastposition zurückgeführt wird.

Um eine optimale Anliefersituation gewährleisten zu können, ist bei einer weiteren besonders bevorzugten Ausführungsform eine Transportsicherung vorgesehen. Ferner ist es möglich, die Geometrie von Schnittstellen zwischen der erfindungsgemäßen Gurthöhenverstelleinheit und der Verkleidung des mit dieser zu bestückenden Kraftfahrzeugs so auszubilden, dass beispielsweise eine Blindmontage der B-Säulen-Verkleidung möglich gemacht wird.

Die Mitnehmerfunktion für einen Verkleidungsschieber wird z.B. über einen Durchbruch in der erfindungsgemäßen Gurthöhenverstelleinheit und z.B. einen Dorn, der vom Verkleidungsschieber kommt, realisiert.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine perspektivische Darstellung einer Laufschiene der erfindungsgemäßen Gurthöhenverstelleinheit;
- Fig. 2A, 2B: unterschiedliche Ansichten von perspektivischen Darstellungen eines Gleitschlittens der erfindungsgemäßen Gurthöhenverstelleinheit;
- Fig. 3A, 3B: unterschiedliche Ansichten eines Hybridriegels der erfindungsgemäßen Gurthöhenverstelleinheit;
- Fig. 4A, 4B: unterschiedliche Ansichten in Form perspektivischer Darstellungen einer Komfortfeder sowie deren Einbau in der Laufschiene gemäß Fig. 1,
- Fig. 5A, 5B: perspektivische Darstellungen der Komfortfeder sowie einer Druckfeder;
- Fig. 6: eine perspektivische, der Fig. 1 entsprechende Darstellung des Zusammenbaues der erfindungsgemäßen Gurthöhenverstelleinheit; und
- Fig. 7: eine Schnittdarstellung durch einen Teil der Gurthöhenverstelleinheit gemäß Fig.6.

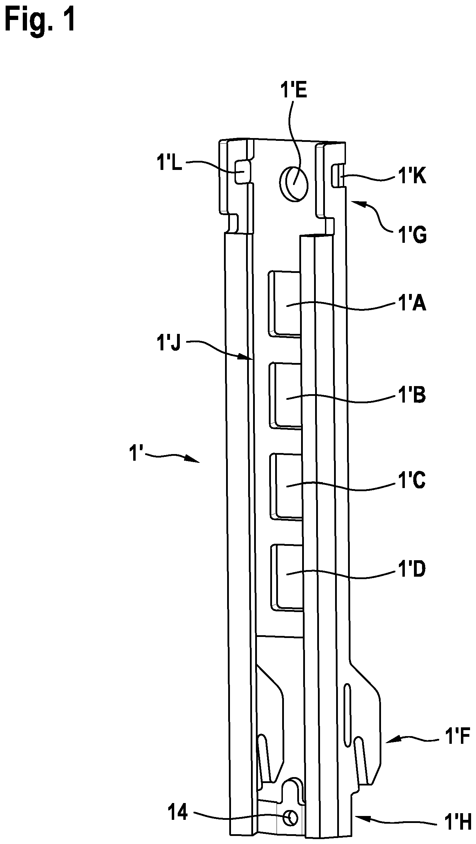

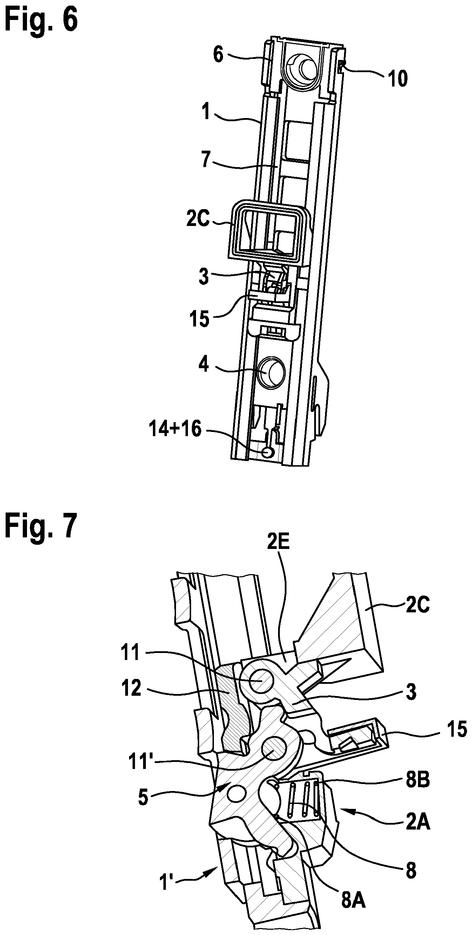

Fig. 1 zeigt eine perspektivische Darstellung einer Laufschiene 1' einer in Fig. 6 dargestellten erfindungsgemäßen Gurthöhenverstelleinheit 1. Die Laufschiene 1' weist eine Mehrzahl von Rastausnehmungen 1'A bis 1'D auf, die Rastpositionen bestimmen. Die hier dargestellte Anzahl von vier Rastpositionen ist jedoch rein beispielhaft und kann je nach Anwendungsfall angepasst werden.

Die Laufschiene 1' ` weist ferner an einem ersten Endbereich 1'G eine Befestigungsausnehmung 1'E auf sowie eine Hakenanordnung 1'F, die an einem dem ersten Endbereich 1'G gegenüber angeordneten zweiten Endbereich 1'H angeordnet ist. Durch die Befestigungsausnehmung 1'E und die Hakenanordnung 1'F kann die Laufschiene 1' an einem Teil einer Fahrzeugkarosserie, wie in der Eingangs bereits erläuterten B-Säule eingehängt und fixiert werden.

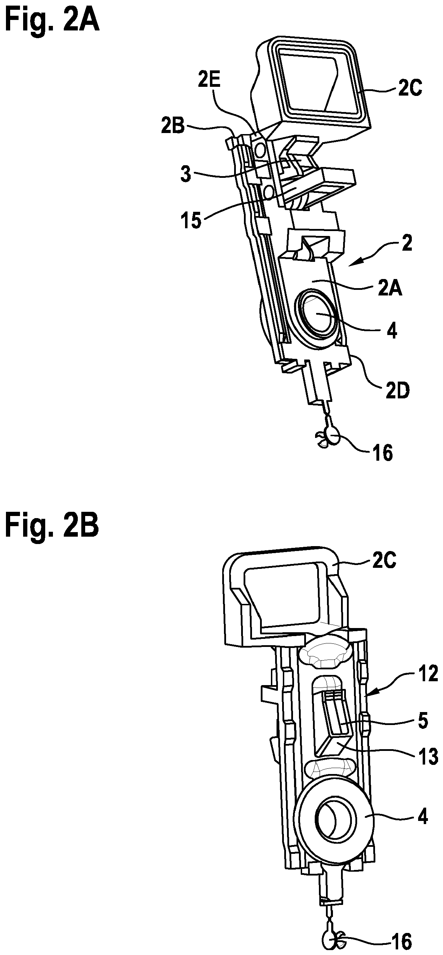

Ferner umfasst die Laufschiene 1' zwischen den beiden Endbereichen 1'G und 1'H einen Führungsbereich 1'J auf, in dem ein Gleitschlitten 2, der nachfolgend anhand der Fig. 2A und 2B beschrieben wird, entlang der Längsachse der Laufschiene 1' gleitbeweglich geführt werden kann.

Die in den Fig. 2A und 2B dargestellte Gleitschiene 2 weist ein Schlittenblech 12 auf, mittels welchem der Gleitschlitten 2 in der Laufschiene 1' geführt werden kann.

Am Schlittenblech 12 ist ein Schlittengehäuse 2A befestigt, das an einem ersten Endbereich 2B mit einem Mitnehmer 2C versehen ist, der einen Mitnehmer für eine in den Figuren nicht dargestellte Verkleidung ist. Ferner weist das Schlittenblech 12 einen zweiten Endbereich 2D auf, der dem ersten Endbereich 2B gegenüber angeordnet ist.

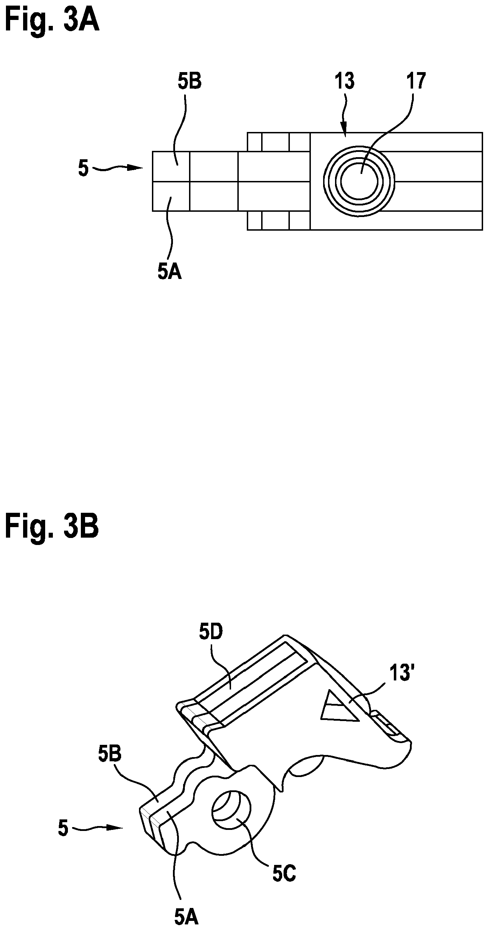

Der Gleitschlitten 2 weist ferner einen drehbar gelagerten Auslösehebel 3 auf, der mit einem Anlagehebel 15 eines drehbar gelagerten Riegels 5 in Wirkverbindung steht, was nachfolgend anhand der Fig. 3A und 3B sowie Fig. 7 im Einzelnen erläutert werden wird.

Der Auslösehebel 3 der erfindungsgemäßen Gurthöhenverstelleinheit kann am Schlittengehäuse 2A drehbar gelagert werden, wozu beispielsweise in Fig. 7 ein entsprechender Bolzen 11 verwendet werden kann.

Wie die Fig. 2A und 2B ferner verdeutlichen, weist der Gleitschlitten 2 ein Verbindungselement 4 auf, das eine am Schlittenblech 12 und dem Schlittengehäuse 2A fixierte Buchse in Form eines Gewindestutzens sein kann, die zur Aufnahme einer Befestigungsschraube dient, mittels der eine Umlenköse für einen Sicherheitsgurt befestigt werden kann. Schließlich zeigen die Fig. 2A und 2B, dass der Mitnehmer 2C rahmenartig, beispielsweise rechteckig, ausgeführt sein kann und über einen Verbindungssteg 2E mit dem Schlittengehäuse 2A verbunden sein kann. Durch diese Anbindung ergibt sich, wie insbesondere Fig. 2A verdeutlicht, eine Versetzung der Ebene des rahmenartigen Mitnehmers 2C gegenüber der Ebene des Schlittengehäuses 2A.

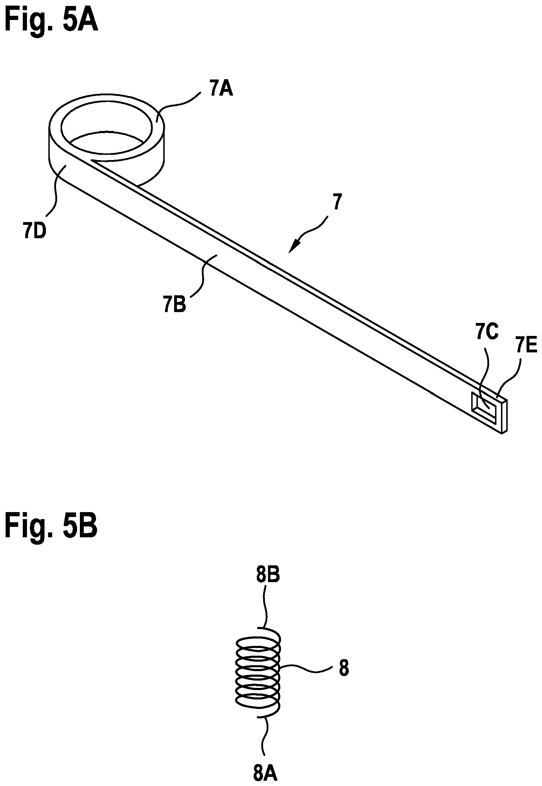

Unter Bezugnahme auf die Fig. 3A und 3B wird deutlich, dass der Riegel 5 bevorzugterweise ein Hybridbauteil ist, das zwei Metallriegelteile 5A und 5B umfasst und ferner eine Kunststoffummantelung 13 aufweist, die einen Ummantelungsbereich 5D der Metallriegelteile 5A und 5B ummantelt. Die Kunststoffummantelung 13 ergibt hierbei eine gleitoptimierte Kunststoffkontur und dient hierbei als gleitoptimierendes und geräuschhemmendes Bauteil. Im Falle eines Crashs wird der Hybridriegel 5 in einer der Ausnehmungen 1'A bis 1'D verrastet und verhindert somit ein Durchrutschen des Gleitschlittens 2. Wie Fig. 3A ferner verdeutlicht, weist die Kunststoffummantelung 13 eine Aufnahme 17, beispielsweise in Form eines Kunststoffzapfens auf, auf die ein Ende 8A einer in Fig. 5B dargestellten Druckfeder 8 aufgesetzt werden kann. Dies wird nachfolgend unter Bezugnahme auf die Fig. 7 im Einzelnen erläutert. Wie Fig. 3B verdeutlicht, weist die Kunststoffummantelung 13 eine Sollbruchstelle 13' auf, die bei einem Crash das Einrasten des Riegels 5 in eine der Rastausnehmungen 1'A bis 1'D ermöglicht und somit ein Durchrutschens des Gleitschlittens 2 verhindert.

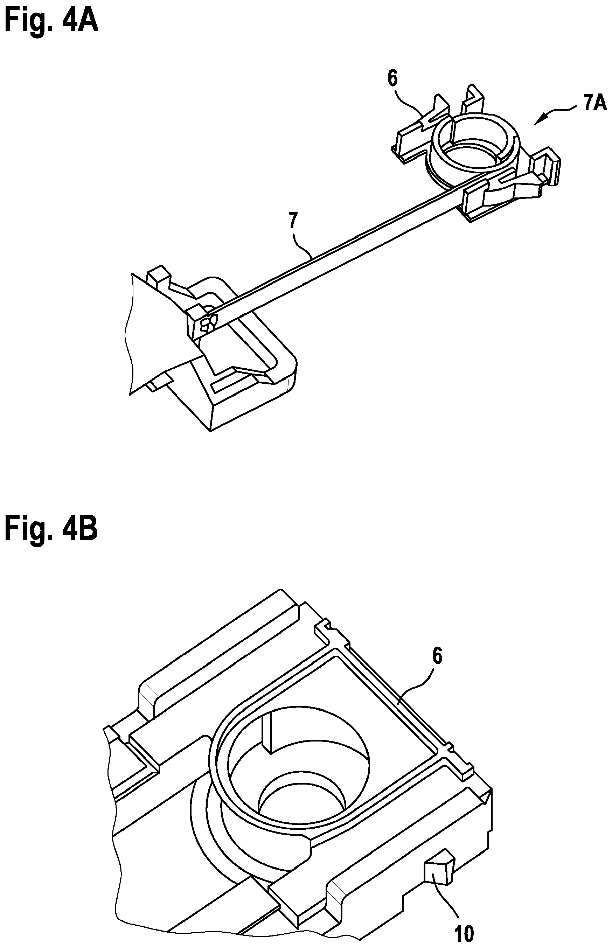

Aus einer Zusammenschau der Fig. 4A, 4B und 5A wird die Ausbildung, Anordnung und Funktion einer sog. Komfortfeder 7 deutlich. Gemäß 5A weist die Komfortfeder 7 einen ringförmigen Haltebereich 7A auf, der in einen Federhalter 6, der sich aus Fig. 4B ergibt, eingesetzt und in diesem fixiert werden kann. Die Komfortfeder 7 weist ferner an einem dem ersten Endbereich 7D gegenüber angeordneten Endbereich 7E eine Halteausnehmung 7C auf, wobei zwischen den beiden Endbereichen 7D und 7E ein langgestreckter, im Beispielsfalle rechteckförmig ausgebildeter Federsteg 7B angeordnet ist. Fig. 4A verdeutlicht hierbei, dass die Komfortfeder 7 über ihre Halteausnehmung 7C am Schlittengehäuse 2A fixiert werden kann, während der ringförmige Haltebereich 7A in einem Federhalter 6 fixiert werden kann, der wiederum über Rastelemente 10, von denen in Fig. 4B nur ein Rastelement 10 sichtbar ist, an der Laufschiene 1' fixiert werden kann. Hierfür weist die Laufschiene 1' wiederum Rastausnehmungen 1'K und 1'L auf, die in Fig. 1 sichtbar sind.

Ferner ergibt sich aus einer Zusammenschau der Figuren 2A und 6 das Vorsehen einer Transportsicherung, die einen Stecker 16 umfasst, der über einen Steg am zweiten Endbereich 2D des Gleitschlittens 2 angebracht ist und im in Fig. 6 dargestellten Endmontagezustand in eine Ausnehmung 14 der Laufschiene 1 eingreift, wobei die Ausnehmung 14 auch aus Fig. 1 ersichtlich ist.

Eine Zusammenschau der Fig. 6 und 7 erläutert den Zusammenbau der zuvor erläuterten Einzelkomponenten der erfindungsgemäßen Gurthöhenverstelleinheit 1.

Insbesondere verdeutlicht die Fig. 7, dass der Riegel 5 über einen eine Ausnehmung 5C (s. Fig. 3B) durchgreifenden Bolzen 11' drehbar am Gleitschlitten 2 gelagert ist und über einen Anlagehebel 15 mit dem drehbar gelagerten Auslösehebel 3 in Wirkverbindung steht. Dadurch wird erreicht, dass die Verbindung zum, in den Figuren nicht dargestellten, kraftfahrzeugseitigen Einhand-Auslösemechanismus jederzeit gewährleistet werden kann. Hierzu kann der Auslösehebel 3 bei seiner Drehung im Anlagehebel 15 ab- und auftauchen. Die Druckfeder 8 stützt sich, wie zuvor erläutert, mit einem ihrer Enden 8A an der Aufnahme 17 der Kunststoffummantelung 13 ab, während sie sich mit ihrem gegenüberliegenden Ende 8B am Schlittengehäuse 2A abstützt und dadurch der Riegel 5 in Position gehalten wird, so dass in der Anlageposition die Verrastung greift und damit als Sicherheitsbauteil dient. Wie eingangs erläutert, dient hierbei der partiell ummantelnde Kunststoffbereich 13 als geräuschhemmendes und gleitoptimierendes Bauteil. Bei einem Crash und somit bei einer Maximalbelastung der erfindungsgemäßen Gurthöhenverstelleinheit 1 verriegelt diese automatisch in der eingestellten Rastposition und verhindert somit ein Durchrutschens des Gleitschlittens 2 in den unteren Endanschlag. Bei der Maximalbelastung stützt sich hierbei das Schlittenblech 12 auf dem Riegel ab. Der Hybridriegel wiederum stützt sich auf der Laufschiene 1' ab, sobald die Kunststoffummantelung 13 in dem entsprechenden Bereich (Sollbruchstelle 13') deformiert wird (s. Fig. 3B).

Neben der vorstehenden schriftlichen Beschreibung der Erfindung wird zu deren ergänzender Offenbarung hiermit explizit auf die zeichnerische Darstellung der Erfindung in den Fig. 1 bis 7 Bezug genommen.

## Patentansprüche

1. Gurthöhenverstelleinheit (1)
- mit einer Laufschiene (1'), die aufweist:
• eine Mehrzahl von durch Rastausnehmungen (1'A bis 1'D) bestimmte Rastpositionen,
• eine Befestigungsausnehmung (1'E) an einem ersten Endbereich (1'G),
- eine Hakenanordnung (1'F) an einem gegenüber angeordneten zweiten Endbereich (1'H), und
• einen Führungsbereich (1'I) zwischen dem ersten und dem zweiten Endbereich (1'G, 1'H), und
- mit einem Gleitschlitten (2), der im Führungsbereich (1'I) der Laufschiene (1`) verschieblich geführt ist und hierfür ein Schlittenblech (12) aufweist,
• der ein am Schlittenblech (12) befestigtes Schlittengehäuse (2A) aufweist, das einen ersten Endbereich (2B) mit einem Mitnehmer (2C) und einen gegenüber angeordneten zweiten Endbereich (2D) aufweist, und
• der einen drehbar gelagerten Auslösehebel (3) aufweist, der mit einem Anlagehebel (15) eines drehbar gelagerten Riegels (5) in Wirkverbindung steht,
- wobei der Riegel (5) ein Hybridbauteil ist, das zwei Metallriegelteile (5A, 5B) und eine Kunststoffummantelung (13) mit einer Sollbruchstelle (13') aufweist, wobei die Kunststoffummantelung (13) einen Ummantelungsbereich (5D) der Metallriegelteile (5A, 5B) umgibt.

2. Gurthöhenverstelleinheit nach Anspruch 1, **dadurch gekennzeichnet, dass** die Gleitschiene (1') in einen ersten Endbereich (1'E) eine Befestigungsausnehmung (1'E) und an einem dem ersten Endbereich (1'G) gegenüber angeordneten zweiten Endbereich (1'H) eine Hakenanordnung (1'F) aufweist.

3. Gurthöhenverstelleinheit nach Anspruch 1 oder 2, **dadurch gekennzeichnet, dass** die der Mitnehmer (2C) rahmenartig, insbesondere rechteckrahmenartig ausgebildet ist.

4. Gurthöhenverstelleinheit nach einem der Ansprüche 1 bis 3, **dadurch gekennzeichnet, dass** der Mitnehmer (2C) versetzt zum Schlittengehäuse (2A) angeordnet ist.

5. Gurthöhenverstelleinheit nach Anspruch 4, **dadurch gekennzeichnet, dass** der Mitnehmer (2C) über einen Verbindungssteg (2E) mit dem Schlittengehäuse (2A) verbunden ist.

6. Gurthöhenverstelleinheit nach einem der Ansprüche 1 bis 5, **dadurch gekennzeichnet, dass** der Gleitschlitten (2) ein Verbindungselement (4) aufweist, das vorzugsweise eine am Schlittenblech (12) und im Schlittengehäuse (2A) fixierte Buchse in Form eines Gewindestutzens ist.

7. Gurthöhenverstelleinheit nach Anspruch 6, **dadurch gekennzeichnet, dass** die Kunststoffummantelung (13) eine Aufnahme (17) für ein Ende (8A) einer Druckfeder (8) aufweist.

8. Gurthöhenverstelleinheit nach Anspruch 7, **dadurch gekennzeichnet, dass** sich das andere Ende (8B) der Druckfeder (8) am Schlittengehäuse (2A) abstützt.

9. Gurthöhenverstelleinheit nach einem der Ansprüche 1 bis 8, **gekennzeichnet durch** eine Komfortfeder (7), die an einem ersten Endbereich (7D) einen ringförmigen Haltebereich (7A) aufweist, der in einem Federhalter (6) fixiert ist, und die einen zweiten Endbereich (7E) aufweist, der mit einer Halteausnehmung (7C) versehen ist, wobei zwischen den Endbereichen (7D, 7E) ein langgestreckter Federsteg (7B) angeordnet ist.

10. Gurthöhenverstelleinheit nach Anspruch 9, **dadurch gekennzeichnet, dass** der Federhalter (6) Rastelemente (10) aufweist, die in Rastausnehmungen (1'K, 1'L) der Laufschiene eingreifen.

11. Gurthöhenverstelleinheit nach einem der Ansprüche 1 bis 10, **gekennzeichnet durch** eine Transportsicherung (16), die in eine Ausnehmung (17) der Laufschiene (1') eingreift.
